# EUROPEAN PATENT APPLICATION

(11) **EP 1 892 648 A2**
(43) Date of publication of application: **27.02.2008**
(21) Application number: 07016571.7
(22) Date of filing: 23.08.2007
(51) Int. Cl.: G06K 17/00, G06K 7/00, G06Q 10/00

(54) **RFID tag communication apparatus**

(30) Priority: 23.08.2006 JP 2006227127
(71) Applicant: Brother Kogyo Kabushiki Kaisha, Nagoya-shi, Aichi 467-8561 (JP)
(72) Inventor: Ito, Akira, Nagoya-shi, Aichi 467-8561 (JP); Ohashi, Tsuyoshi, Nagoya-shi, Aichi 467-8561 (JP); Taki, Kazunari, Nagoya-shi, Aichi 467-8561 (JP); Nishikawa, Osamu, Nagoya-shi, Aichi 467-8561 (JP); Ichikawa, Yasuhisa, Nagoya-shi, Aichi 467-8561 (JP); Yamada, Shiro, Nagoya-shi, Aichi 467-8561 (JP)
(74) Representative: Feldmeier, Jürgen

(57) **Abstract**

An RFID tag communicating apparatus (200) has: an antenna (10) that transmits/receives a signal by wireless communication with RFID circuit elements (To) provided at the tag labels provided at a bookshelf on which books are placed and an operator, respectively, a radio frequency circuit (201), a barcode reader (203) that optically detects information of a barcode (C) provided at a book (B) ; and a control circuit (202). The control circuit (202) has a function to write various work information of the book (B) in an IC circuit part (150) of the RFID circuit element (To) provided for management of the book (B) via the antenna (10) and the radio frequency circuit (201) in accordance with a detection result of the barcode information by the barcode reader (203).

## Description

### TECHNICAL FIELD

The present invention relates to an RFID tag communicating apparatus which transmits/receives information by wireless communication with respect to an RFID circuit element provided at a target.

### BACKGROUND ART

An information reading device is known that for article management, an information holding portion (barcode and the like) is provided at an article to be managed and the held information is read contactlessly.

As a prior part of this type of information reading device, an inventory control device for inventory management, for example, is known (See JP, A, 7-168897, for example). In this prior art, a barcode placed on each part is read out by a barcode reader connected to a handy terminal. The read-out barcode information is transmitted to a computer from the handy terminal via wireless communication to be collected at the computer for real-time update of inventory data, issuance of purchase orders and the like.

### DISCLOSURE OF THE INVENTION

### Problem to be Solved by the Invention

In the information reading device of the above prior art, barcode information read out by the barcode reader is transmitted to the computer side all the time via wireless communication, and all information is collected for all the parts on the computer side. Therefore, an expensive and large capacity data base which can collect information for all the parts and a communication infrastructure or the like including the above handy terminal and a communication modem for the computer are required, which makes the entire system expensive.

An object of the present invention is to provide an RFID tag communicating apparatus which is capable of relatively inexpensive article management without using an expensive database or communication infrastructure.

In order to achieve the above object, an invention is an RFID tag communicating apparatus comprising optical detecting means that optically detects an optical identifier provided at an article to be managed, communicating means that communicate by a wireless communication with an RFID circuit element provided with an IC circuit part that stores information and an antenna that transmits/receives information, and writing control means that writes various work information relating to storage state of the article in the IC circuit part provided at a first RFID circuit element for management of the article via the communicating means in accordance with a detection result of the optical identifier by the optical detecting means.

In the invention of the present application, the optically detected change or the like in the storage state can be electronically managed through information writing in the RFID circuit element. As a result, without using an expensive database or communication infrastructure, a management system can be constructed relatively inexpensively by the optical identifier, the optical detecting means for detecting the same, the RFID circuit element and the communicating means. Also, by providing the first RFID circuit element for article management and writing the various work information therein based on the detection result of the optical detecting means, there is no need to provide an RFID circuit element at each article any more, and thereby costs can be reduced.

### BRIEF DESCRIPTION OF THE DRAWINGS

Fig. 1 is a diagram illustrating a state where an operator carries out shipment or receipt of a book in an inventory management system for books provided with an embodiment of an RFID tag communicating apparatus of the present invention.

Fig. 2 is a system block diagram illustrating an entire configuration of the inventory management system for books provided with the embodiment of the RFID tag communicating apparatus of the present invention.

Fig. 3 is a front view illustrating a schematic entire structure of a handy scanner, which is an embodiment of the RFID tag communicating apparatus of the present invention.

Fig. 4 is a block diagram illustrating an example of a functional configuration of an RFID circuit element provided at a tag label provided at a bookshelf on which a book to be detected by the handy scanner, which is an embodiment of the RFID tag communicating apparatus of the present invention, and an operator.

Fig. 5 is a functional block diagram illustrating a configuration of a control system of the handy scanner, which is an embodiment of the RFID tag communicating apparatus of the present invention.

Fig. 6 is a functional block diagram illustrating a detailed function of a control circuit of the handy scanner, which is an embodiment of the RFID tag communicating apparatus of the present invention.

Fig. 7 is a flowchart illustrating a control procedure executed by the control circuit.

Fig. 8 is a flowchart illustrating a detailed procedure of a shipment mode processing in Fig. 7.

Fig. 9 is a flowchart illustrating a detailed procedure of a receipt mode processing in Fig. 7.

Fig. 10 is a flowchart illustrating a control procedure executed by the control circuit in a variation when collection information is written in the RFID circuit element.

Fig. 11 is a flowchart illustrating a detailed procedure of the collection mode processing in Fig. 10.

Fig. 12 is a flowchart illustrating a control procedure executed by the control circuit in a variation when disposal information is written in the RFID circuit element.

Fig. 13 is a diagram illustrating an example of information stored in the RFID circuit element provided at the tag label provided at the operator.

Fig. 14 is a diagram illustrating a state where the operator carries out operation of shipment or receipt of a book in a variation when an RFID tag communicating apparatus having a tag label production function is used.

Fig. 15 is a system block diagram illustrating an entire configuration of an inventory management system having a stationary RFID tag communicating apparatus shown in Fig. 14.

### BEST MODE FOR CARRYING OUT THE INVENTION

A preferred embodiment of the present invention will be described below referring to the attached drawings. The present embodiment is an example in which an RFID tag communicating apparatus of the present invention is applied to an inventory management system for books, for example.

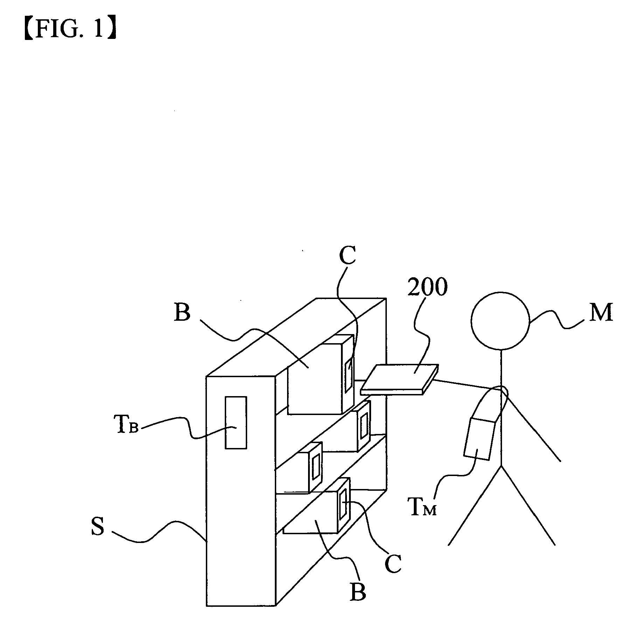

Fig. 1 is a diagram illustrating a state where an operator (worker) M carries out shipment or receipt of a book B in an inventory management system for books.

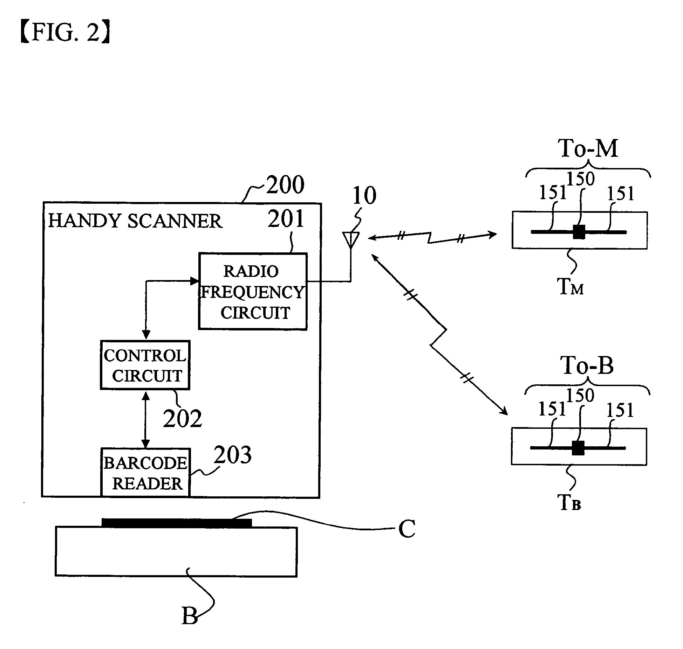

As shown in Fig. 1, each book B is provided with a barcode C specific to the book. Also, a tag label T_{B} having an RFID circuit element To-B (See Fig. 2) in which a tag ID (identification information) for management of each book B to be loaded on a bookshelf S is written is provided at the bookshelf S in this embodiment. Moreover, the operator M wears a tag label (or may be a tag card or the like) T_{M} having an RFID circuit element To-M (See Fig. 2) in which a tag ID specific to the operator is written.

When the operator M performs various works relating to storage state (shipment, receipts, inventory taking, transfer and the like) for the book B, he/she brings a handy type RFID tag communicating apparatus (handy scanner) 200 close to the book B so as to read out information of a barcode C provided at this book B. Also, information of the RFID circuit element To-M (See Fig. 2) provided at the tag label T_{M} worn by the operator M is read out, and information reading/writing is carried out with the RFID circuit element To-B (See Fig. 2) provided at the tag label T_{B} provided at the bookshelf S.

Fig. 2 is a system block diagram illustrating the entire configuration of the inventory management system having the handy scanner 200 of the present invention.

In Fig. 2, the handy scanner 200 has an antenna 10 that transmits/receives a signal by wireless communication with the RFID circuit elements To-B, To-M provided at the tag labels T_{B}, T_{M}, respectively, a radio frequency circuit 201 making an access to the IC circuit part 150 of each of the RFID circuit elements To-B, To-M via the antenna 10 and processing the signal read out of the RFID circuit elements To-B, To-M, a barcode reader 203 that optically detects information of the barcode C provided at the book B (type or unit number of the book), and a control circuit 202 connected to the radio frequency circuit 201 and the barcode reader 203.

As mentioned above, the handy scanner 200 is integrally provided with the radio frequency circuit 201 for communication with the RFID circuit elements To-B, To-M, the antenna 10, and the barcode reader 203, and thereby operability and handling performance by the operator M can be improved.

The RFID circuit elements To-B, To-M provided at the tag labels T_{B}, T_{M} are provided with the IC circuit part 150 that stores information and antenna 151 connected to the IC circuit part 150, respectively. The antenna 151 is a known dipole antenna, for example.

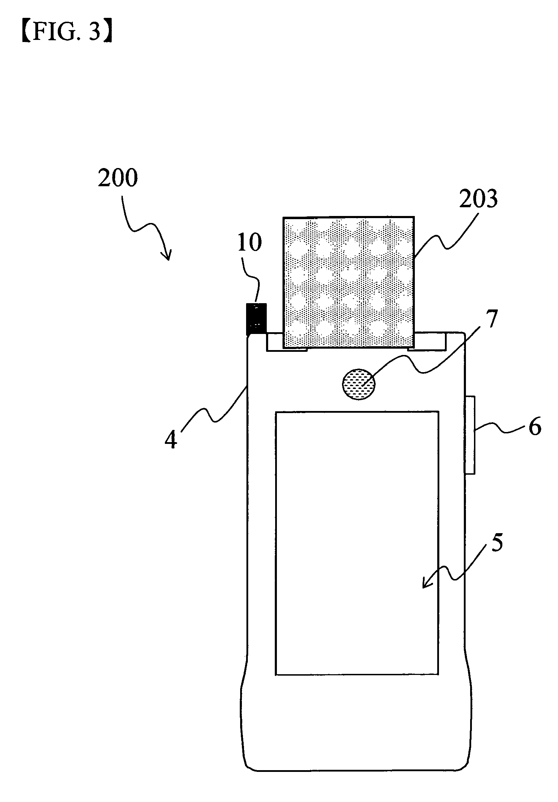

Fig. 3 is a front view illustrating a schematic entire structure of the handy scanner 200 of the present embodiment. In Fig. 3, the handy scanner 200 includes a housing 4, a display portion 5 disposed occupying the majority of the upper part (front side in Fig. 3) of this housing 4 and displaying contents of various information, alarms and the like, an operation portion 6 (buttons, switches and the like) provided on the side face of the housing 4 for operation by the operator M at writing/reading of information, and a sound notification means 7 such as a speaker for notification when information reading/writing is failed. Also, the above antenna 10 and the barcode reader 203 are attached to the housing 4.

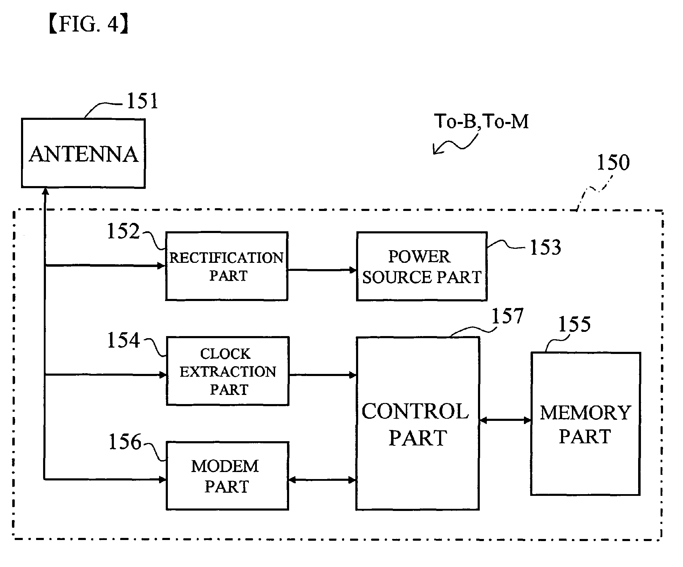

Fig. 4 is a block diagram illustrating an example of a functional configuration of the RFID circuit elements To-B, To-M provided at the tag labels T_{B}, T_{M}.

In Fig. 4, the RFID circuit elements To-B, To-M have the antenna 151 that transmits/receives a signal contactlessly with the antenna 10 of the handy scanner 200 and the IC circuit part 150 connected to the antenna 151, respectively.

The IC circuit part 150 has a rectification part 152 that rectifies a carrier wave received by the antenna 151, a power source part 153 that accumulates energy of the carrier wave rectified by the rectification part 152 to make it a driving power supply, a clock extraction part 154 that extracts a clock signal from the carrier wave received by the antenna 151 and supplying it to a control part 157, which will be described later, a memory part 155 functioning as an information memory part which can store predetermined information signals, a modem part 156 connected to the antenna 151, and the control part 157 that controls operation of the RFID circuit elements To-B, To-M via the rectification part 152, the clock extraction part 154, the modem part 156 and the like.

The modem part 156 demodulates a communication signal from the antenna 10 of the handy scanner 200 received by the antenna 151 and modulates the carrier wave received by the antenna 151 based on a reply signal from the control part 157 and re-send it as a reflective wave from the antenna 151. The control part 157 interprets a received signal demodulated by the modem part 156, generates a reply signal based on an information signal stored in the memory part 155 and executes basic control such as control to make a reply form the modem part 156.

The clock extraction part 154 extracts a clock component from a received signal and extracts a clock to the control part 157 and supplies a clock corresponding to the speed of the clock component of the received signal to the control part 157.

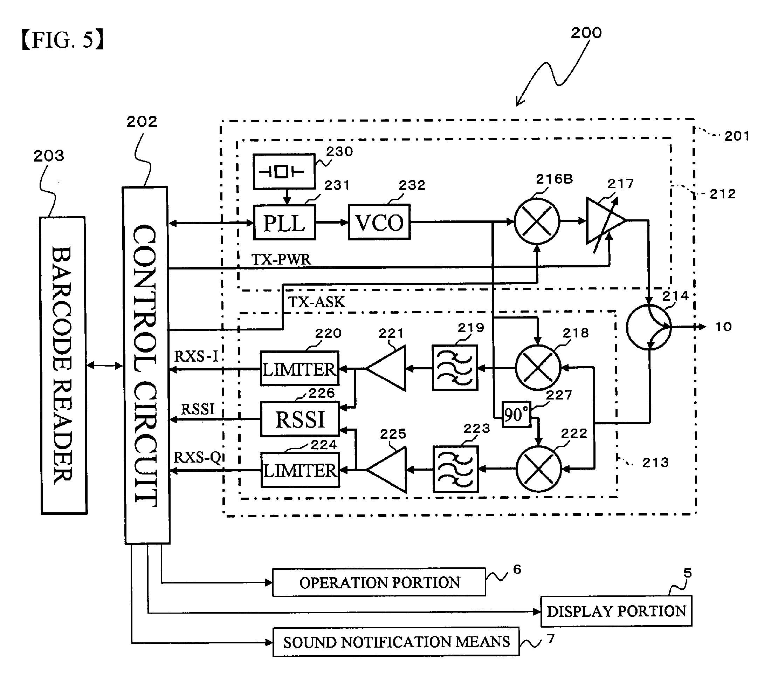

Fig. 5 is a functional block diagram illustrating a configuration of a control system of the handy scanner 200.

In Fig. 5, the radio frequency circuit 201 includes a transmitting portion 212 that transmits a signal to the RFID circuit elements To-B, To-M via the antenna 10, a receiving portion 213 in which a reflective wave from the RFID circuit elements To-B, To-M is input by the antenna 10, and a transmit-receive splitter 214.

The transmitting portion 212 is provided with a crystal oscillator 230 that generates a carrier wave for reading the RFID tag information of the IC circuit part 150 of the RFID circuit elements To-B, To-M, a PLL (phase Locked Loop) 231 that generates a signal at a predetermined frequency by control of the control circuit 202, a VCO (Voltage Controlled Oscillator) 232, a transmission multiplying circuit 216 that modulates (in this example, amplitude modulation based on a "TX_ASK" signal from the control circuit 202) the carrier wave generated based on a signal supplied from the control circuit 202 (however, in the case of the "TX_ASK" signal, a variable amplification factor amplifier or the like may be used), and a variable transmission amplifier 217 that amplifies the modulated wave modulated by the transmission multiplying circuit 216 (in this example, the amplification factor is determined by the "TX_PWR" signal from the control circuit 202). Then, the generated carrier wave preferably uses a frequency in the UHF band, microwave band or short-wave band, and the output of the transmission amplifier 217 is transmitted to the antenna 10 through the transmit-receive splitter 214 and supplied to the IC circuit part 150 of the RFID circuit elements To-B, To-M. The RFID tag information is not limited to the above modulated signal but includes only a simple carrier wave.

The receiving portion 213 is provided with a first receiving signal multiplying circuit 218 that multiplies a reflective wave from the RFID circuit elements To-B, To-M received by the antenna 10 by the generated carrier wave, a first band-pass filter 219 that extracts only a required band signal from the output of the first receiving signal multiplying circuit 218, a first receiving signal amplifier 221 that amplifies the output of this first band-pass filter 219, a first limiter 220 that further amplifies the output of the first receiving signal amplifier 221 and converting it to a digital signal, a second receiving signal multiplying circuit 222 that multiplies the reflective wave from the RFID circuit elements To-B, To-M received by the antenna 10 by the carrier wave whose phase is delayed by 90 degrees after being generated, a second band-pass filter 223 that extracts only a required band signal from the output of the second receiving signal multiplying circuit 222, a second receiving signal amplifier 225 that amplifies the output of this second band-pass filter 223, and a second limiter 224 that further amplifies the output of the second receiving signal amplifier 225 and converting it to a digital signal. Then, a signal "RXS-I" output from the first limiter 220 and a signal "RXS-Q" output from the second limiter 224 are input to and processed by the control circuit 202.

The outputs of the first receiving signal amplifier 221 and the second receiving signal amplifier 225 are also input to an RSSI (Received Signal Strength Indicator) circuit 226, and a signal "RSSI" indicating the strength of those signals is input to the control circuit 202. In this way, in the handy scanner 200 according to the present embodiment, the reflective wave from the RFID circuit elements To-B, To-M is demodulated by I-Q orthogonal demodulation.

On the other hand, the barcode reader 203 is connected to the control circuit 202, and barcode information of the book B optically detected by the barcode reader 203 is sent out to the control circuit 202.

Also, to the control circuit 202, an operation signal from the operation portion 6 is input, and a display control signal to the display portion 5, a notification signal to the sound notification means 7 or the like are output therefrom.

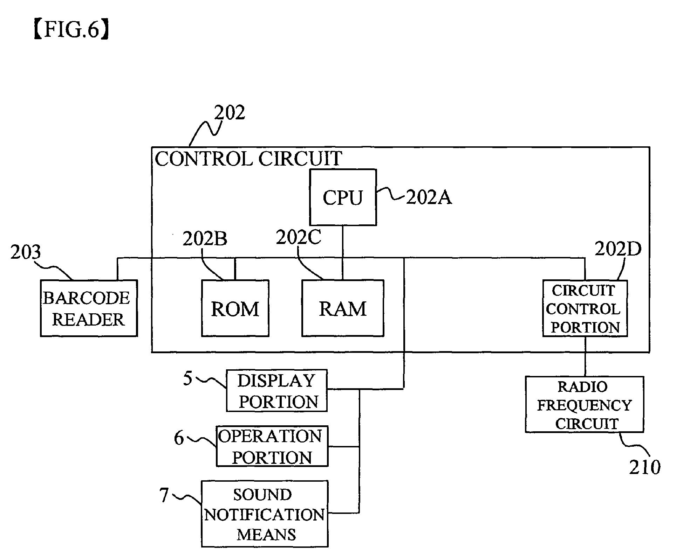

Fig. 6 is a functional block diagram illustrating a detailed function of the control circuit 202.

In Fig. 6, the control circuit 202 is a so-called microcomputer, including a CPU 202A, which is a central processing unit, a ROM 202B, a RAM 202C, a circuit control portion 202D for signal transmission/reception with the radio frequency circuit 201 and the like and executes signal processing according to a program stored in advance in the ROM 202B while utilizing a temporary storing function of the RAM 202C.

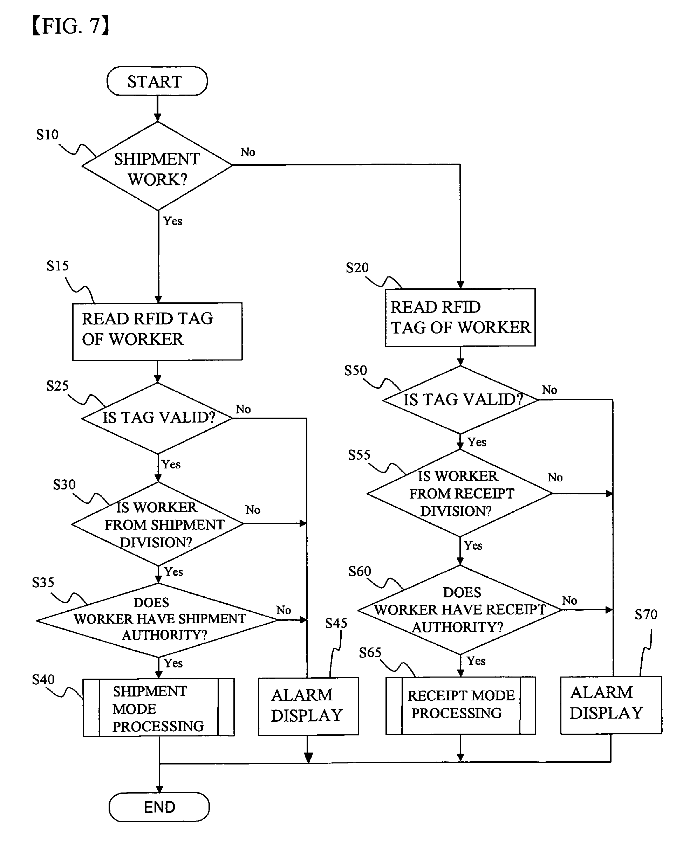

In the above, the characteristic of the present embodiment is that according to a detection result of the barcode C attached to the book B by the barcode reader 203, various work information relating to the storage state of the article (or tag ID or the like associated with the various work information. When the various work information is stored in the server and linked to the tag ID or the like) of the book B is written in the IC circuit part 150 of the RFID circuit element To-B provided at the tag label T_{B} provided at the bookshelf S for management of the book B. The detailed procedure will be described below in the order using Fig. 7.

Fig. 7 is a flowchart illustrating the control procedure executed by the control circuit 202. This flow is started when the handy scanner 200 is powered on, for example.

First, at Step S10, it is determined whether the work performed by the operator M is a shipping work or not. In the handy scanner 200, a plurality of work modes are set according to each of the above various work modes relating to the storage state. In this example, two modes are provided, a shipment mode corresponding to the shipping work and a receipt mode corresponding to a receiving work, and either of the modes can be selected by the operator M by instruction operation at the operation portion 6 (buttons, switches or the like). Therefore, the determination on work at this Step S10 is made by the result of the above mode selection. Other than the instruction operation by the operation portion 6, the mode can be selected by a method of reading of a barcode, an RFID circuit element or the like incorporating the work instruction information.

When the work to be executed is the shipping work, the determination at Step S10 is satisfied, and the routine goes to Step S15, while when the work to be executed is not the shipping work, the determination is not satisfied but the work is considered as receipt and the routine goes to Step S20.

At Step S15, the information on the RFID circuit element To-M provided at the tag label T_{M} worn by the operator M is read out. Specifically, by transmitting a reading control signal to the transmitting portion 212, a reading signal is transmitted to the IC circuit part 150 of the RFID circuit element To-M and the information of the RFID circuit element To-M is received via the receiving portion 213 as a reply signal corresponding to the above reading signal. The information stored in the RFID circuit element To-M includes company/division information to which the operator M belongs, operation authority information such as shipment/receipt authority and other information relating to the operator M, for example.

Next, at Step S25, based on the read-out RFID circuit element To-M, it is determined whether the tag label T_{M} worn by the operator M is valid or not (whether it is not failed or a type presumed in advance or not). If the tag label T_{M} of the operator M is valid, the determination is satisfied, and the routine goes to Step S30, while if the tag label T_{M} of the operator M is not valid, the determination is not satisfied but the routine goes to Step S45.

At Step S30, based on the read-out RFID circuit element To-M, it is determined whether the operator M is a person from the shipment division. If the operator M is from the shipment division, the determination is satisfied and the routine goes to Step S35, while if the operator M is not from the shipment division, the determination is not satisfied but the routine goes to Step S45.

At Step S35, based on the read-out RFID circuit element To-M, it is further determined whether the operator M has a shipment authority. If the operator M has the shipment authority, the determination is satisfied and the routine goes to Step S40, while if the operator M does not have the shipment authority, the determination is not satisfied but the routine goes to Step S45.

At Step S40, a shipment mode processing (which will be described later) is executed. At Step S45, the fact that the shipment mode processing is not to be executed is displayed as an alarm on the display portion 5 for any of the reasons that the tag label T_{M} worn by the operator M is not valid, the operator M is not from the shipment division, or the operator M does not have the shipment authority.

At Step S20, the information of the RFID circuit element To-M provided at the tag label T_{M} worn by the operator M is read out. This procedure to read out the information on the RFID circuit element To-M is the same as that of Step S15.

Next, at Step S50, based on the read-out RFID circuit element To-M, it is determined whether the tag label T_{M} worn by the operator M is valid or not. If the tag label T_{M} worn by the operator M is valid, the determination is satisfied, and the routine goes to Step S55, while if the tag label T_{M} worn by the operator M is not valid, the determination is not satisfied but the routine goes to Step S70.

At Step S55, based on the read-out RFID circuit element To-M, it is determined whether the operator M is from the receipt division or not. If the operator M is from the receipt division, the determination is satisfied, and the routine goes to Step S60, while if the operator M is not from the receipt division, the determination is not satisfied but the routine goes to Step S70.

At Step S60, based on the read-out RFID circuit element To-M, it is determined whether the operator M has the receipt authority or not. If the operator M has the receipt authority, the determination is satisfied, and the routine goes to Step S65, while if the operator M does not have the receipt authority, the determination is not satisfied but the routine goes to Step S70.

At Step S65, a receipt mode processing (which will be described later) is executed. At Step S70, the fact that the receipt mode processing is not to be executed is displayed as an alarm on the display portion 5 for any of the reasons that the tag label T_{M} worn by the operator M is not valid, the operator M is not from the receipt division, or the operator M does not have the receipt authority.

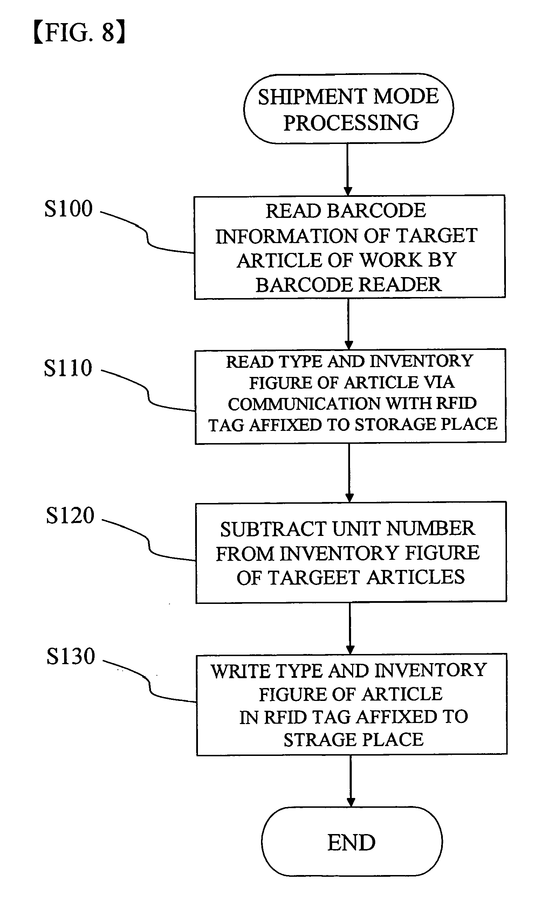

Fig. 8 is a flowchart illustrating a detailed procedure of the shipment mode processing at the above-mentioned Step S40.

In Fig. 8, first, at Step S100, barcode information of the book B to be shipped (type of the book, the unit number or the like) is optically read out by the barcode reader 203.

Then, at Step S110, the information of the RFID circuit element To-B provided at the tag label T_{B} affixed to the bookshelf S (type information, quantity information, date information and the like of each book) is read out. Specifically, by transmitting a reading control signal to the transmitting portion 212, a reading signal is transmitted to the IC circuit part 150 of the RFID circuit element To-B, and the information of the RFID circuit element To-B is received via the receiving portion 213 as a reply signal corresponding to the above reading signal.

Then, at Step S120, a calculation is made so as to reduce the inventory figure (quantity information) of the book of the type applicable to the book B to be shipped by the unit number (normally one).

In addition, at Step S130, in the RFID circuit element To-B provided at the tag label T_{B} affixed to the bookshelf S, new information after subtraction of the quantity information on the type of the book B to be shipped at the above Step S120 is written. Specifically, by transmitting a writing control signal to the above transmitting portion 212, the writing information is transmitted to the IC circuit part 150 of the RFID circuit element To-B. As a result, the inventory figure of the book B stored in the IC circuit part 150 of the RFID circuit element To-B is updated. Not limited to the overwriting with the subtracted figure, data indicating that the single subtraction processing is to be executed for the RFID circuit element To (when the RFID circuit element To itself is provided with a calculation function, for example) may be transmitted so that the subtraction overwriting is made in the RFID circuit element To. Also, instead of the overwriting update of the numeral values as necessary (the previous numeral values are deleted) as this, update history of all the numeral-value information may be accumulated (the previous numeral values remain). Moreover, in addition to the type, inventory figure and the like of the book, the operator's data may be recorded in the RFID circuit element To-B.

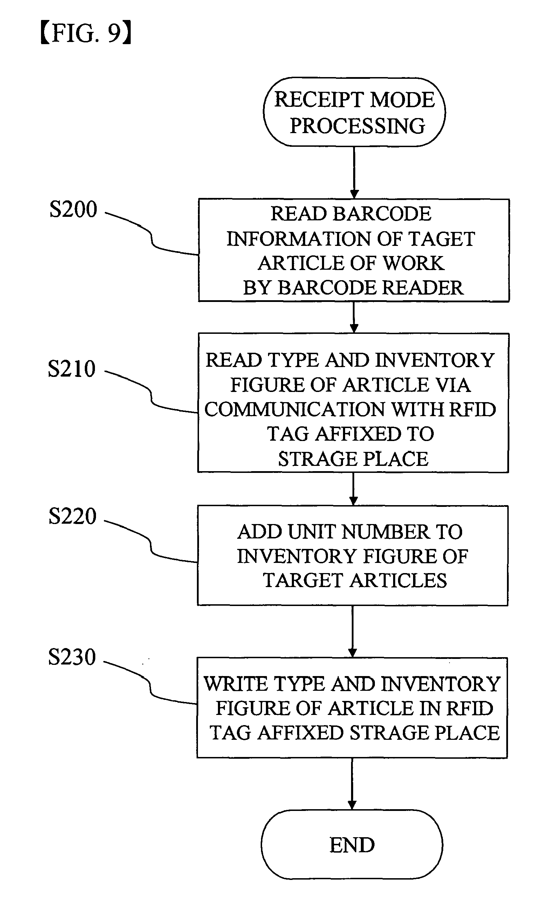

Fig. 9 is a flowchart illustrating a detailed procedure of a receipt mode processing at the above-mentioned Step S65.

In Fig. 9, first, at Step S200, the barcode information of the book B to be received (type or unit number of the book) is optically read out by the barcode reader 203.

Then, at Step S210, the information of the RFID circuit element To-B provided at the tag label T_{B} affixed to the bookshelf S (type information, quantity information, date information and the like of each book) is read out. The information reading procedure of the RFID circuit element To-B is the same as that of Step S110.

Then, at Step S220, calculation is made so as to add the inventory figure (quantity information) of the book B to be received by the unit number (normally one).

Then, at Step S230, new information after addition of the quantity information at the above Step S220 on the type of the book B to be received is written into the RFID circuit element To-B provided at tag label T_{B} affixed to the bookshelf S. The information writing procedure into the RFID circuit element To-B is the same as that of the above Step S130. As a result, the inventory figure of the book B stored in the IC circuit part 150 of the RFID circuit element To-B is updated as history information. Similarly to the above, not limited to the overwriting of the added figure, data indicating that the single addition processing is to be executed for the RFID circuit element To (when the RFID circuit element To itself is provided with a calculation function, for example) may be transmitted so that addition overwriting is executed in the RFID circuit element To. Also, instead of the overwriting update of the numeral values as necessary (the previous numeral values are deleted) as this, update history of all the numeral-value information may be accumulated (the previous numeral values remain). Moreover, in addition to the type, inventory figure and the like of the book, the operator's data may be recorded in the RFID circuit element To-B.

As mentioned above in the present invention, when a change occurs in the storage state of the book B (shipping work or receipt work in this example), the information of the barcode C provided at the book B is optically detected by the barcode reader 203. Then, when the book B is to be shipped, the inventory figure of the book B is subtracted, while the book B is to be received, the inventory figure of the book B is added. In addition, the inventory figure after the shipment or receipt is written in the IC circuit part 150 of the RFID circuit element To-B of the tag label T_{B} affixed to the bookshelf S for book management. As a result, the change in the storage state of the book B can be electronically controlled while change in the inventory figure by the single management unit corresponding to the single RFID circuit element To-B is surely reflected.

Therefore, without using a particularly expensive database or communication infrastructure, the inventory management system can be constituted relatively inexpensively. Also, since the RFID circuit element To-B is provided for book management and the various work information (shipping and receipt work information in this example) based on the detection result of the barcode reader 203, there is no need to provide an RFID circuit element at each book, which can also reduce costs.

Moreover, by providing the RFID circuit element To-B at the bookshelf S, the various work information of the book B can be easily managed by the bookshelf unit, which is a single management unit corresponding to a single RFID circuit element To-B, and particularly since the inventory figure history information of the book B stored in the RFID circuit element To-B is updated, the history of past information on the inventory figure of each bookshelf S can be checked.

Also, by reading out the information of the RFID circuit element To-M provided at the tag label T_{M}, the operation authority information of the operator M is obtained, and writing is made in the RFID circuit element To-B of the tag label T_{B} according to the operation authority information, and thus, only the operator M having the operation authority is enabled to manage books, and book management by an operator M without operation authority can be prohibited (See Step S45, Step S70 in Fig. 7) . As a result, more secure management is enabled.

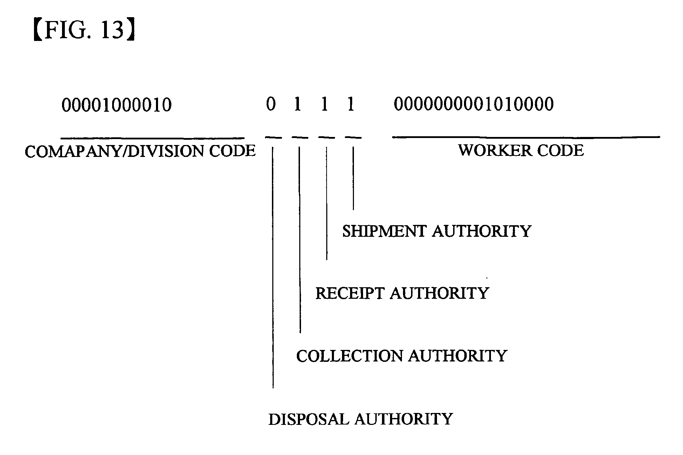

The present invention is not limited to the above embodiment but capable of various variations in a range not departing from its gist and the technical idea. The variations will be described below.
(1) When collection information is written in the RFID circuit element:
   In the above embodiment, the shipment information or receipt information is written in the RFID circuit element To-B of the tag label T_{B} as various work information, but not limited to that, inventory summary information may be written.

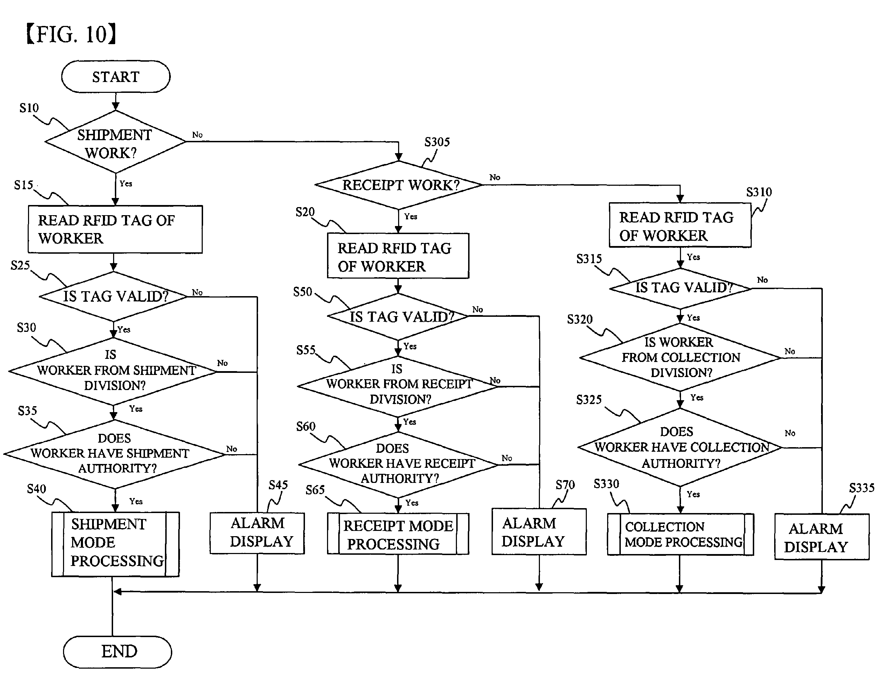

   Fig. 10 is a flowchart illustrating a control procedure executed by the control circuit 202 in this variation. In Fig. 10, Steps S10 to S70 are the same as the flow shown in the above-mentioned Fig. 7.
   At Step S10, if it is determined that the work to be executed is not the shipment work, the routine goes to Step S305, where it is determined whether the work to be executed is the receipt work or not. This work determination is made based on the mode selection by the operator M as in the above Step S10. That is, in this example, an inventory mode corresponding to the inventory taking work in addition to the shipment mode and the receipt mode, totaling in 3 modes, is provided at the handy scanner 200, and the operator M can select any one of the modes by the instruction operation using the above operation portion 6 (buttons, switches or the like).
   If the work to be executed is the receipt work, the determination at Step S305 is satisfied, and the routine goes to the above-mentioned step S20, while if the work to be executed is not the receipt work, the determination is not satisfied but the work is considered to be the inventory taking collection work, and the routine goes to Step S310.
   At Step S310, the information of the RFID circuit element To-M provided at the tag label T_{M} worn by the operator M is read out. The information reading procedure of the RFID circuit element To-M is the same as that of the above-mentioned Step S15.
   Next, at Step S315, based on the read-out RFID circuit element To-M, it is determined whether the tag label T_{M} worn by the operator M is valid (whether it is not failed or a type presumed in advance or not) . If the tag label T_{M} of the operator M is valid, the determination is satisfied, and the routine goes to Step S320, while if the tag label T_{M} of the operator M is not valid, the determination is not satisfied but the routine goes to Step S335.
   At Step S320, based on the read-out RFID circuit element To-M, it is determined whether the operator M is a person from the collection division. If the operator M is from the collection division, the determination is satisfied and the routine goes to Step S325, while if the operator M is not from the collection division, the determination is not satisfied but the routine goes to Step S335.
   At Step S325, based on the read-out RFID circuit element To-M, it is further determined whether the operator M has a collection authority. If the operator M has the collection authority, the determination is satisfied and the routine goes to Step S330, while if the operator M does not have the collection authority, the determination is not satisfied but the routine goes to Step S335.
   At Step S330, a collection mode processing (which will be described later) is executed. At Step S335, the fact that the collection mode processing (which will be described later) is not to be executed is displayed as an alarm on the display portion 5 for any of the reasons that the tag label T_{M} worn by the operator M is not valid, the operator M is not from the collection division, or the operator M does not have the collection authority.

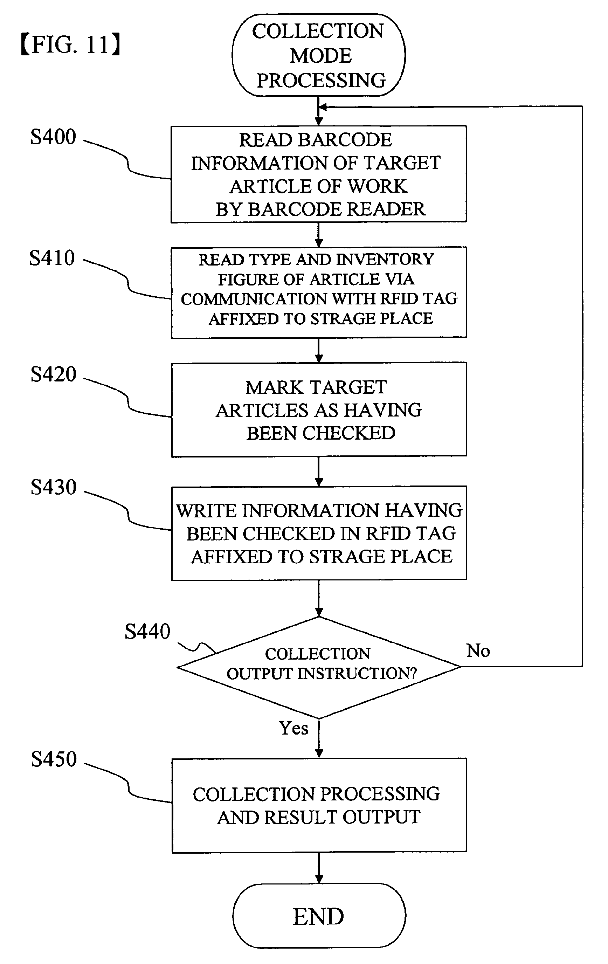

   Fig. 11 is a flowchart illustrating the detailed procedure of the collection mode processing at the above-mentioned Step S330.
   In Fig. 11, first, at Step S400, the barcode information of the book B for which inventory taking is to be made (type or unit number of the book) is optically read out by the barcode reader 203.
   Then, at Step S410, the information of the RFID circuit element To-B provided at the tag label T_{B} affixed to the bookshelf S (type information, quantity information, date information and the like of each book) is read out. The information reading procedure of the RFID circuit element To-B is the same as that of Step S110 and the like.
   Then, at Step S420, the book B, which is a target article, read out at the above-mentioned Step S400 is marked as having been checked for inventory taking processing (inventory check) among the information read out from the RFID circuit element To-B at Step S410.
   Then, at Step S430, new information after checking at Step S420 is written in the RFID circuit element To-B provided at the tag label T_{B} affixed to the bookshelf S. This information writing procedure in the RFID circuit element To-B is the same as that of the above-mentioned Step S130 and the like. As a result, the inventory status of the bookshelf S stored in the IC circuit part 150 of the RFID circuit element To-B is updated.
   After that, the routine goes to Step S440, where it is determined if there has been a collection output instruction by the operator M via the operation portion 6. If there has been no instruction, the determination is not satisfied, but the routine returns to Step S400 and repeats the same procedure. If there has been a collection output instruction, the determination at Step S440 is satisfied and the routine goes on to Step S450.
   At Step S450, various quantities of the inventory work executed through repetition of Step S400 to Step S440 so far are all collected and the collection result is output in a predetermined format (may be displayed on the display portion 5 or any other connected external display means or may be printed by externally connected printing means), and this flow is finished.
   With the variation with the above configuration, the same effect as that of the above-mentioned embodiment can be also obtained. Also, by reading the information of the book B stored in the IC circuit part 150 of the RFID circuit element To-B and by collecting and outputting it, the inventory of the books B can be checked. Also, since information of all the articles (books B) included in the management unit (bookshelf S) is stored in one RFID circuit element, another effect can be exerted that information collection is easy. The same method can be used for confirmation when the book B is to be moved between a plurality of bookshelves S, S.
(2) When disposal information is to be written in the RFID circuit element
   In the above embodiment, the shipment information or receipt information is written in the RFID circuit element To-B of the tag label T_{B}, but not limited to that, disposal information may be further written.

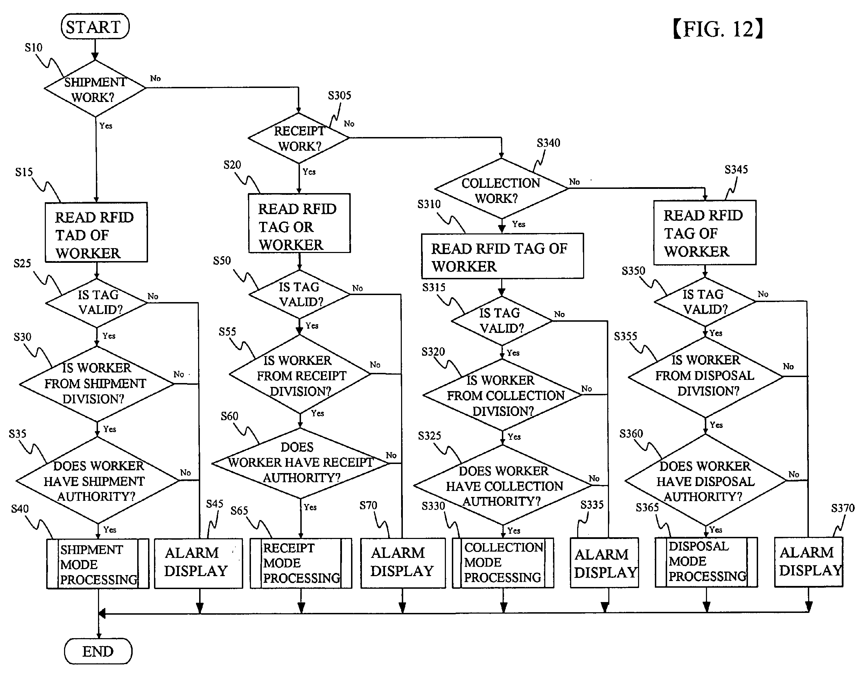

   Fig. 12 is a flowchart illustrating a control procedure executed by the control circuit 202 in this variation. In Fig. 12, Steps S10 to S70 and Steps S305 to S335 are the same as the flow shown in the above-mentioned Fig. 10.
   At Step S305, if it is determined that the work to be executed is not the receipt work, the routine goes to Step S340, where it is determined whether the work to be executed is the inventory summary work or not. This work determination is made similarly to the above-mentioned Step S10. That is, in this example, a disposal mode corresponding to the disposal work in addition to the shipment mode, the receipt mode, and the inventory mode, totaling in 4 modes, is provided at the handy scanner 200, and the operator M can select any one of the modes by the instruction operation using the above operation portion 6 (buttons, switches or the like).
   If the work to be executed is the inventory summary work, the determination is satisfied, and the routine goes to the above-mentioned step S310, while if the work to be executed is not the inventory summary work, the determination is not satisfied but the work is considered to be the disposal work, and the routine goes to Step S345.
   At Step S345, the information of the RFID circuit element To-M provided at the tag label T_{M} worn by the operator M is read out. The information reading procedure of the RFID circuit element To-M is the same as that of the above-mentioned Step S15 and the like.
   Here, an example of information of the RFID circuit element To-M read as above is illustrated in Fig. 13. In Fig. 13, in this example, the worker (operator) code, the operation authority information code such as shipment authority, receipt authority, collection authority and disposal authority and the company/division code are stored in the RFID circuit element To-M.
   The company/division code is used to determine a division to which the operator M belongs at the above-mentioned Step S30, Step S55, Step S320, and Step S355 and the like, which will be described later. The worker code may be used at the same time as this determination.
   The operation authority code is used to determine the division to which the operator M belongs (to determine whether the operator M has an operation authority) at the above-mentioned Step S35, S60, S325, and S360 and the like, which will be described later. As shown in the figure, a single operator M may be granted a plurality of types of operation authority.
   Returning to Fig. 12, after Step S345 is finished, the routine goes to Step S350, where based on the read-out RFID circuit element To-M, it is determined if the tag label T_{M} worn by the operator M is valid (whether it is not failed or a type presumed in advance or not). If the tag label T_{M} of the operator M is valid, the determination is satisfied, and the routine goes to Step S355, while if the tag label T_{M} of the operator M is not valid, the determination is not satisfied but the routine goes to Step S370.
   At Step S355, based on the read-out RFID circuit element To-M, it is determined whether the operator M is a person from the disposal division or not. If the operator M is from the disposal division, the determination is satisfied and the routine goes to Step S360, while if the operator M is not from the disposal division, the determination is not satisfied but the routine goes to Step S370.
   At Step S360, based on the read-out RFID circuit element To-M, it is further determined whether the operator M has a disposal authority. If the operator M has the disposal authority, the determination is satisfied and the routine goes to Step S365, while if the operator M does not have the disposal authority, the determination is not satisfied but the routine goes to Step S370.
   At Step S365, the disposal mode processing is executed. Specifically, a predetermined invalidation signal is transmitted to the RFID circuit element To-B provided at the tag label T_{B} affixed to the bookshelf S and a valid/invalid flag in the data of the RFID circuit element To-B is rewritten to "invalid". As a result, reading or writing of information with the RFID circuit element To-B cannot be executed at all any more.
   At Step S370, the fact that the disposal mode processing is not to be executed is displayed as an alarm on the display portion 5 for any one of the reasons that the tag label T_{M} worn by the operator M is not valid, the operator M is not from the disposal division, or the operator M does not have the disposal authority.
(3) When an RFID tag communicating apparatus having a tag label production function is used:
   In the above embodiment, the RFID tag communicating apparatus (handy scanner) 200 may be provided with a function to produce a tag label T_{B} provided with an RFID circuit element To-B, which is the other party of communication by the RFID tag communicating apparatus. When the tag label production function is provided in this way, the device does not have to be a handy type as above but it may be a stationary RFID tag communicating apparatus.

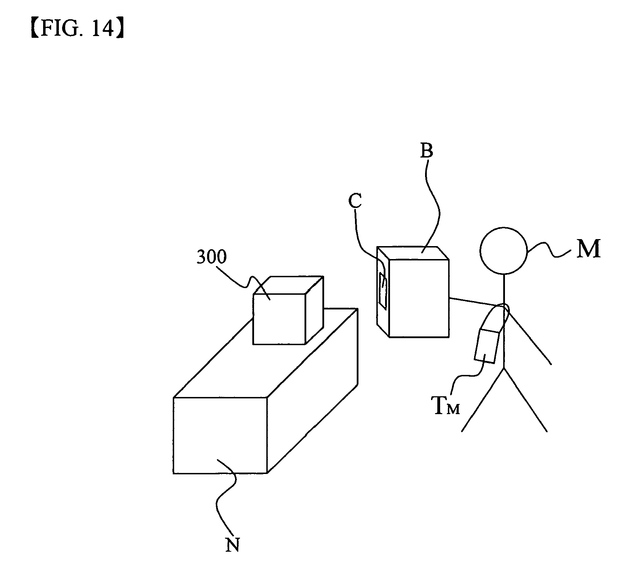

   Fig. 14 is a diagram illustrating a state where the operator M is carrying out a shipment work (or a receipt work) of the book B using a stationary RFID tag communicating apparatus 300 in this variation. As shown in Fig. 14, in this variation, the RFID tag communicating apparatus 300 is placed on a shelf N, for example. In this case, the operator M carries the book B to be shipped or received to the RFID tag communicating apparatus 300 and brings the book B close to the RFID tag communicating apparatus 300 so that the information of the barcode C provided at the book B is read out and then, the same processing as that of the above-mentioned RFID tag communicating apparatus 200 is executed according to the reading result.

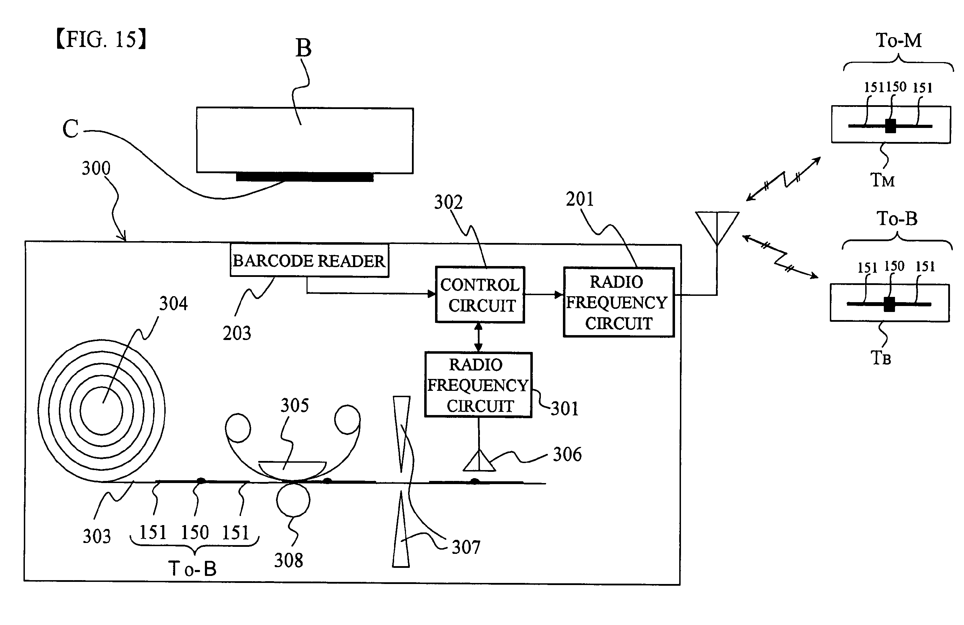

   Fig. 15 is a system block diagram including the entire configuration of the RFID tag communicating apparatus 300 of this variation provided with the above label production function.
   In Fig. 15, the RFID tag communicating apparatus 300 is provided with the RFID label production function as mentioned above, and the functions other than the RFID label production function are the same as those of the RFID tag communicating apparatus 200. That is, the RFID tag communicating apparatus 300 has the above-mentioned radio frequency circuit 201, the antenna 10, the barcode reader 203, a tag tape roll 304 around which a tag tape 303 provided with the RFID circuit elements To-B with a predetermined interval, a print head (printing means) 305 that makes predetermined print in an area corresponding to each RFID circuit element To-B in the tag tape 303 fed out of the tag tape roll 304, a feeding roller 308 that feeds the tag tape 303, an antenna 306 and the radio frequency circuit 301 that transmits/receive information via wireless communication with the RFID circuit element To-B, a cutter 307 that cuts the tag tape 303 for which print on the tag tape 303 and information writing to the RFID circuit element To-B have been finished into a predetermined length to have the above-mentioned RFID label T_{B}, and a control circuit 302 that controls the radio frequency circuits 201, 301, the barcode reader 203, the print head 305, the feeding roll 308 and the cutter 307.
   The radio frequency circuit 301 has substantially the same function as that of the radio frequency circuit 201 of the above handy scanner 200, though detailed description will be omitted.
   The control circuit 302 generates access information to the IC circuit part 150 of the RFID circuit element To-B in addition to the same function as that of the control circuit 202 of the above handy scanner 200, transmits the access information to the RFID circuit element To-B via the radio frequency circuit 301 and the antenna 306, and writes information in the IC circuit part 150 of the RFID circuit element To-B (functioning as writing control means). At this time, the information to be written in the RFID circuit element To-B is various work information of the book B as above (shipment information, receipt information, inventory information and the like), and after the writing in the RFID circuit element T is finished, cutting by the cutter 307 to the predetermined length is carried out so as to form the RFID label T_{B}.
   In this variation, since the production function of the RFID label T_{B} provided with the RFID circuit element To-B is added to the RFID tag communicating apparatus 300, the RFID tag communicating apparatus 300 is capable of operations from the label production to the article management via the subsequent information reading, and thereby greatly improving convenience. The production of above-mentioned RFID tag label T_{M} may be made possible similarly to the above.
(4) Others
   (A) Environment information detection
      In the above, environment information detecting means such as a temperature sensor that detects environment information (ambient temperature or the like) at various works (specifically at reading by the barcode reader 203) may be provided at the RFID tag communicating apparatus so that the detected environment information may be written along with the various work information when the various work information is written in the RFID circuit element To-B of the tag label T_{B} affixed to the bookshelf. As a result, inventory management from the diversified viewpoint including the environment information is enabled, which further improves convenience on the manager side.
   (B) When an operator has a plurality of operation authorities:
      In the above, the authority information of the operator M is obtained from the RFID circuit element To-M provided at the RFID label T_{M} worn by the operator M, and it is determined at Step S35, Step S60, Step S325, Step S360 in Figs. 7, 10 and 12 whether the operation authority matches the various work mode to be executed. Here, as shown in one example in the above-mentioned Fig. 13, the operator M might have a plurality of types of operation authorities. In this case, the operator M is made to input operation concerning which operation authority is to be used for the work by appropriate selection operation by the operator M via the operation portion 6 so that the writing of the various work information is made in the RFID circuit element To-B according to the selection.
      Alternatively, moreover, it may be checked by the control circuit 202 or the like if the above selected operation authority matches the operation authority information based on the reading result at Step S15, Step S20, Step S310 and Step S345 in Figs. 7, 10 and 12. In this case, only when the operation authority selected by the operator M matches the operation authority granted to the operator M read out of the RFID circuit element To-M, the article management is enabled, while if they do not match, an alarm notification or the like may be made.
      In the above, an example of the inventory management of books as the article to be managed was explained, but the article to be managed is not limited to books. Also, the place where the tag label having the RFID circuit element in which the management information of the article is written is provided may be a shelf, a box, a container, a pallet or the like.
      Other than the methods described above, the methods according to the above embodiment and the variations may be used in combination.
      Other than above, not exemplifying each, but the present invention can be implemented by adding various modifications within a scope not departing from the gist thereof.

## Claims

1. An RFID tag communicating apparatus (200; 300) comprising:
optical detecting means (203) that optically detects an optical identifier (C) provided at an article (B) to be managed;
communicating means (10; 306) that communicate by a wireless communication with an RFID circuit element (To) provided with an IC circuit part (150) that stores information and an antenna (151) that transmits/receives information; and
writing control means (S40, S65; S40, S65, S330) that writes various work information relating to storage state of said article (B) in said IC circuit part (150) provided at a first RFID circuit element (To-B) for management of said article (B) via said communicating means (10; 306) in accordance with a detection result of said optical identifier (C) by said optical detecting means (203).

2. The RFID tag communicating apparatus (200; 300) according to claim 1 **characterized in that**:
said writing control means (S40, S65; S40, S65, S330) writes said various work information in accordance with the detection result by said optical detecting means (203) and a work mode of said RFID tag communicating apparatus (200; 300).

3. The RFID tag communicating apparatus (200; 300) according to claim 2 **characterized in that**:
said writing control means (S40, S65; S40, S65, S330) decreases/increases quantity information of said article (B) at said IC circuit part (150) of said first RFID circuit element (To-B) in accordance with the detection result by said optical detecting means (203) and a work mode of said RFID tag communicating apparatus (200; 300).

4. The RFID tag communicating apparatus (200; 300) according to claim 2 **characterized in that**:
said writing control means (S40, S65; S40, S65, S330) updates quantity history information of said article (B) stored in said IC circuit part (150) of said first RFID circuit element (To-B) in accordance with the detection result by said optical detecting means (203) and a work mode of said RFID tag communicating apparatus (200; 300).

5. The RFID tag communicating apparatus (200; 300) according to any one of claims 1 to 4 **characterized in that**:
said RFID tag communicating apparatus (200; 300) further comprises environment information detecting means that detects environment information at detection of said optical identifier (C) by said optical detecting means (203); and
saidwritingcontrolmeans (S40, S65; S40, S65, S330) writes said environment information detected by said environment information detecting means in said IC circuit part (150) of said first RFID circuit element (To-B) along with various work information of said article (B) at detection of said optical identifier (C) by said optical detecting means (203).

6. The RFID tag communicating apparatus (200; 300) according to claim 1 **characterized in that**:
said RFID tag communicating apparatus (200; 300) further comprises:
reading control means (S400) that reads said various work information of said article (B) stored in said IC circuit part (150) provided at the first RFID circuit element (To-B) provided for management of said article (B) via said communicating means (10; 306) in accordance with the detection result by said optical detecting means (203) and a work mode of said RFID tag communicating apparatus (200; 300); and
collection outputting means (S450) that collects and outputs said various work information read out by said reading control means (S400).

7. The RFID tag communicating apparatus (200; 300) according to any one of claims 1 to 6 **characterized in that**:
said RFID tag communicating apparatus (200; 300) further comprises authority information obtaining means (S15, S20; S15, S20, S310) that obtains operation authority information stored in said IC circuit part (150) provided at a second RFID circuit element (To-M) provided for checking an operation authority via said communicating means (10; 306); and
said writing control means (S40, S65; S40, S65, S330) writes said various work information in said IC circuit part (150) of said first RFID circuit element (To-B) in accordance with said operation authority information obtained by said authority information obtaining means.

8. The RFID tag communicating apparatus (200; 300) according to claim 7 **characterized in that**:
said RFID tag communicating apparatus (200; 300) further comprises signal input means that inputs a selection operation signal for selecting any of a plurality of types of said operation authority; and
said writing control means (S40, 565; S40, S65, S330) writes said various work information in accordance with said selection operation signal input by said signal input means.

9. The RFID tag communicating apparatus (200; 300) according to claim 8 **characterized in that**:
said RFID tag communicating apparatus (200; 300) further comprises: collating means that collates said operation authority information obtained by said authority information obtaining means with the operation authority corresponding to said selection operation signal input by said signal input means.

10. The RFID tag communicating apparatus (200; 300) according to any one of claims 1 to 9 **characterized in that**:
said RFID tag communicating apparatus (200; 300) is configured as an integral apparatus provided with both said communicating means (10; 306) and said optical detecting means (203).

11. The RFID tag communicating apparatus (300) according to any one of claims 1 to 10 **characterized in that**:
said RFID tag communicating apparatus (300) further comprises feeding means (308) that feeds a tag medium (303) provided with said first or second RFID circuit element (To-B, To-M); and
a cutter (307) that cuts said tag medium (303) having said first or second RFID circuit element (To-B, To-M) into a predetermined length, said first or second RFID circuit element (To-B, To-M) being written said various work information or information corresponding thereto via said communicating means (306) by said writing control means (S40, S65; S40, S65, S330).

12. The RFID tag communicating apparatus (300) according to claim 11 **characterized in that**:
said RFID tag communicating apparatus (300) further comprises printing means (305) that applies a predetermined print on an area provided at said tag medium (303) corresponding to said first or second RFID circuit element (To).
